# EUROPEAN PATENT SPECIFICATION

(11) **EP 2 231 381 B1**
(45) Date of publication and mention of the grant of the patent: **05.09.2018**
(21) Application number: 08860350.1
(22) Date of filing: 15.12.2008
(51) Int. Cl.: B29C 47/02, B05C 3/00

(54) **PROCESS FOR THE PRODUCTION OF A CYLINDRICAL HEAT SOURCE**
VERFAHREN ZUR HERSTELLUNG EINES ZYLINDRISCHEN ARTIKELS
PROCÉDÉ POUR LA FABRICATION D'UN ARTICLE CYLINDRIQUE

(30) Priority: 13.12.2007 EP 07254857
(43) Date of publication of application: 29.09.2010
(73) Proprietor: Philip Morris Products S.A., 2000 Neuchâtel (CH)
(72) Inventor: CLEMENS, Dr. Frank, Jorg, CH-8600 Duebendorf (CH); RAETHER, Friedrich, 97204 Hoechberg (DE); BABER, Jens, 97082 Wurzburg (DE); FRIEDRICH, Holger, 95482 Grunstein (DE)
(74) Representative: Taylor, Gillian Claire
(86) International application number: PCT/IB2008/003691
(87) International publication number: WO 2009/074870

(56) References cited:
- JP-A- 2002 283 430
- US-A- 4 248 576
- US-A- 4 347 855
- US-A- 5 133 368
- US-A1- 2003 168 772
- US-A1- 2007 215 168

## Description

The present invention relates to a process according to claim 1, for the production of a cylindrical, carbonaceous heat source having a plurality of longitudinal air flow channels extending through it, the surface of at least one of which is coated.

Extrusion is a well known manufacturing process used in many industries, including the food, metal, plastic and ceramic industries, for the production of elongate rods and tubes with a fixed cross section. In an extrusion process, a plastic feedstock is pushed or drawn through a die having the inverse geometry to the desired shape of the extruded article. For example, solid rods are produced by extruding the feedstock through a die orifice. One or more hollow passageways may be created in an extruded rod by mounting one or more pins, or mandrels, in the die orifice.

It is also known to use an extrusion process to apply a coating layer to a substrate. For example, EP-A-0 914 239 discloses a die for simultaneously extruding one or more fluid streams onto a moving web to form a coating layer thereon.

A coating layer may be directly applied to the surface of an extruded article in the process of co-extrusion, in which two or more different materials are extruded through different orifices in the same die. The orifices are arranged so that the extruded materials merge and weld together into a laminar structure as they leave the die. For example, EP-A-0 662 385 and EP-A-0 491 093 both disclose co-extrusion processes for the production of a tube having two or more concentric layers. However, co-extrusion has been found to be unsuitable for applying a coating layer having a thickness of less than about 1mm, because problems are encountered when the die orifice through which the coating is extruded becomes too narrow. Typically, high viscosity feedstocks are used in extrusion in order to obtain mechanical stability so that the extruded articles do not deform under gravity during the extrusion or during subsequent handling. However, forcing a high viscosity feedstock through a narrow orifice creates large shear forces inside the orifice. High pressures are therefore required to force the high viscosity feedstock through the die and to prevent blockages of the die orifice. Furthermore, abrasion of the die is high, which will significantly reduce the lifetime of the die. This is a particular problem if the feedstock contains hard, abrasive particles such as ceramic particles.

A number of alternative methods for applying a coating layer to one or more surfaces of an extruded rod or tube have been proposed in the art. The application of a coating layer to the outer surfaces of an extruded article may be carried out using relatively simple conventional coating techniques such as spraying and dipping. However, the application of a coating layer to the interior surfaces of an extruded tube is more difficult.

DE-A-35 25 530 and DE-A-102 49 141 both describe extrusion processes in which a coating layer is applied to the inner surfaces of an extruded polymer tube. In the process of DE-A-35 25 530 a cylindrical layer of the coating material is formed, then applied directly to the inner surface of an extruded tube and mechanically pressed against that surface by means of a mandrel. In the process of DE-A-102 49 141, the coating material is injected onto the inner surface of the tube through one or more feed channels in a mandrel mounted within the die orifice. The coating material is then mechanically pressed against the inner surface by the end of the mandrel, which is of an increased diameter compared to the rest of the mandrel.

In the processes described in DE-A-35 25 530 and DE-A-102 49 141, it is possible to apply coating compounds having a lower viscosity than those required in co-extrusion. However, as with co-extrusion, the dimensions of the die, and in particular the die orifice and the flow channels in the mandrel, are determined by the dimensions of the extruded article and the thickness of coating that is desired. The smaller the die orifice and flow channels required, the harder it becomes to manufacture and operate the die and the more likely it is that abrasion and blockage will occur during extrusion.

Heated smoking articles, such as heated cigarettes, typically incorporate a combustible fuel element, or heat source. An aerosol is generated by the transfer of heat from the heat source to a physically separate aerosol forming material, which may be located within, around, or downstream of the heat source. The heat source may be formed by extrusion and advantageously comprises at least one longitudinal air flow channel extending along the entire length of the heat source. The at least one air flow channel provides a controlled amount of convective heating of the aerosol-generating substance. The inner surface of the air flow channels may be partially or entirely coated where it is desired to reduce the convective heat transfer. The coating may advantageously reduce or substantially prevent the inflow of combustion by-products from the combustible heat source into the airflow channel or channels. The coating may also advantageously reduce or prevent the activation of combustion of the heat source during puffing.

US-A-5 040 551 describes a process for the production of a carbonaceous fuel element for a heated smoking article. The fuel element has one or more longitudinally extending passageways, the surfaces of which are coated with a microporous layer of solid particulate material. The coating is applied to the surfaces of the passageways of a pre-formed fuel element by spraying, dipping or by flowing a suspension of the coating through the fuel element. The coating is then dried in order to remove the solvent from the suspension.

US 2007/215168 A1 describes a process for the production of a carbonaceous fuel element for a heated smoking article. The fuel element has a longitudinal air flow channel, the inner surface of which has a coating layer which is applied by means of a dip-coating process.

JP 2002 283430 describes an apparatus for manufacturing an extruded tubular article with a coating on its inner surface. The tubular article is formed by extruding a raw material through a die having an orifice and a mandrel. The coating is applied during the extrusion of the tubular article is through the die.

It has been found to be difficult to provide a uniform, homogenous coating layer on the surface of the passageways, for a number of reasons. The passageways of the fuel elements may have a diameter of less than about 3 mm, sometimes less than 1mm, and a very thin coating layer is therefore required. As set out above, it is difficult to provide such a thin coating layer with existing techniques, particularly when the coating material is of a low viscosity or contains hard, abrasive materials. Furthermore, the fuel elements are typically formed of a carbonaceous material which is porous and with existing coating techniques it is found that the coating material is absorbed into the pores at the surface of the passageways. This makes it difficult to control the formation of the coating and also leads to non-uniform coating layers, with a poorly defined interface between the carbonaceous material and the coating layer.

It would be desirable to provide a simplified and more efficient process for the production of a cylindrical, carbonaceous heat source for a heated smoking article, the heat source having a plurality of longitudinal air flow channels extending through it, in which a uniform coating is applied to the surfaces of some or all of the air flow channels.

It would also be desirable to provide an effective process for applying a thin coating to the longitudinal air flow channels of a cylindrical heat source while minimising, or substantially eliminating the problems encountered in the prior art processes discussed above.

According to the present invention there is provided a process for the production of a cylindrical, carbonaceous heat source for a heated smoking article, the heat source having a plurality of longitudinal air flow channels extending therethrough, the inner surface of at least one of which is covered with a coating layer, wherein the process comprises the steps of:
(a) forming the cylindrical heat source by extrusion of a carbonaceous material through a die comprising an orifice with a plurality of mandrels mounted therein to form the air flow channels, each mandrel forming one of the longitudinal air flow channels; and
(b) applying a fluid coating compound to the inner surface of at least one of the air flow channels downstream of the mandrel forming the at least one air flow channel by feeding the coating compound through a feed passageway extending longitudinally through the mandrel and having an outlet in the end thereof, wherein the coating compound wets the inner surface of the air flow channel as a result of forces of adhesion between the coating compound and the inner surface, thereby forming the coating layer as the cylindrical heat source is extruded.

The term "cylindrical" is used throughout the specification to describe an extruded heat source having a substantially constant cross section along its length and includes, for example, cylinders having a circular, elliptical or rectangular cross section.

In the process according to the present invention, the coating compound "wets" the inner surface of the air flow channel. This means that the coating compound spreads out over the surface of the air flow channel of its own accord as a result of thermodynamic driving forces and in particular, as a result of the forces of adhesion between the coating compound and the inner surface of the air flow channel. The degree to which a fluid wets a solid surface is a thermodynamic variable that depends on the interfacial tensions of the solid-liquid interface and the liquid-gas interface.

It is possible to determine the degree to which a given liquid will wet a surface by conducting the well known "sessile drop" test, which measures the contact angle between the interface of a droplet and the horizontal surface on which the droplet is placed. The higher the degree of wetting of a surface by a liquid, the more the liquid spreads out on the surface and the lower the contact angle will be. The contact angle is typically measured with a goniometer, using cameras and software to capture and analyse the profile of the drop. The sessile drop test is described, for example, in the Encyclopedia of Surface and Colloid Science, Second Edition, 2006, p1528-9 (published by CRC Press).

In the process of the present invention, it is preferable to select a coating compound which wets a surface of the material forming the extruded heat source to a high degree.

As a result of the way in which the coating layer is formed, it is possible to provide a homogeneous layer of the coating compound on the surface simply by bringing the coating compound into contact with the surface during extrusion. The coating compound will then spread out over the surface of the air flow channel of its own accord as the cylindrical heat source is extruded. This effect will occur irrespective of the position at which the coating compound is fed into the air flow channel and there is therefore no need to inject the coating compound adjacent the inner surface of the air flow channel. Instead, the coating compound may be fed into the centre of the air flow channel, away from the inner surfaces thereof, through a feed passageway extending through the centre of the mandrel. This arrangement simplifies the apparatus required for the coating process and significantly reduces the level of precision that is required in the application of the coating layer compared to prior art processes.

Advantageously, in the process of the present invention there is no need to pre-form the coating layer, or apply mechanical contact pressure to press the coating compound against the inner surface of the air flow channel, as in the prior art processes described above. Furthermore, coating compounds of a relatively low viscosity can be used, which gives greater flexibility.

The coating layer applied in the process of the present invention is substantially uniform in composition, structure and thickness over the entire inner surface of the longitudinal air flow channel and the surface of the coating layer is substantially smooth. Furthermore, surface deformations at the inner surface of the air flow channel have been found to be smoothed by the coating. Weaknesses in the coating layer which would otherwise be caused as a result of such deformations are therefore substantially eliminated. These advantageous surface properties are a result of the coating layer being formed due to thermodynamic forces, rather than by the mechanical application of pressure. In contrast to the present invention, in the processes of the prior art in which the mandrel is used to mechanically press the coating layer against the surface of the extruded article, the coating layer will not be smooth, since the inevitable imperfections in the surface of the mandrel and the extruded article cause imperfections in the surface of the coating layer.

Surprisingly, using the process of the present invention, it has been found that the coating compound is not significantly absorbed into the carbonaceous material of the heat source, even when the carbonaceous material has a high porosity and a relatively low viscosity coating compound is used. Unexpectedly, the coating layer is therefore uniform and well defined, with a sharp interface and good adhesion between the surface of the air flow channel and the coating layer. These advantageous properties reduce the likelihood of defects occurring in the final heat source and optimise the performance of the heat source during use of the heated smoking article into which it is incorporated.

Using the process of the present invention it is possible to apply a coating to the inner surface of a longitudinal air flow channel of an extruded cylindrical heat source during the extrusion process, using much simpler apparatus than required in the prior art processes. Preferably, the extrusion step and the coating step take place substantially simultaneously. The process of the present invention is therefore an efficient, single step process which takes a similar amount of time as a simple extrusion process. The process is also suitable for industrial scale production of heat sources at relatively high speed.

The coated heat sources formed by the process of the present invention are suitable for use in a variety of electrically heated smoking articles, such as electrically heated cigarettes. During smoking, the coating in the air flow channels of the heat source may perform one or more functions including, but not limited to the decrease and stabilisation of the inner walls of the heat source during smoking, the prevention of the release of solid particulate matter into the mainstream smoke and the prevention of the release of carbon monoxide into the mainstream smoke.

Advantageously, the process of the present invention is suitable for use with a wide variety of coating compounds, since the parameters of the process can be adapted and controlled to suit the properties of the materials being used. The thickness of the coating layer formed in step (b) can also be predictably controlled.

The thickness of a particular coating compound formed using the process of the present invention can readily be predicted by the skilled man through the application of known thermodynamic principles, as described in D. Quéré, Annu. Rev. Fluid Mech., vol. 31 (1999), pages 347-384. In the process of the present invention, the thickness of the coating layer can be altered by changing the viscosity of the coating compound, or the extrusion velocity, or both.

Unlike in the prior art processes described above, the thickness of the coating layer applied to the surface of the air flow channel is not affected by the diameter of the feed passageway in the mandrel, through which the coating compound is fed. Advantageously, therefore, it is possible to alter the thickness of the coating that is deposited by altering the process parameters such as viscosity and extrusion speed, rather than by altering the diameter of the feed passageway in the mandrel. A much simpler design of mandrel can therefore be employed than in the prior art processes. In addition, it is possible to obtain much thinner coatings than have been achieved previously.

Advantageously, since thin coatings can be obtained by the process of the present invention without reducing the diameter of the flow channel in the mandrel, the problems associated with the prior art processes, such as high shear stress and abrasion, are not encountered to such an extent in the process of the present invention.

The process of the present invention also has the advantage that, unlike in the prior art processes, it is possible to apply coating compounds containing hard particles, since the flow channel may have a sufficient diameter to prevent blockage and significant abrasion by the hard particles. Preferably, the coating compound is a suspension of particles in a liquid solvent. Such suspensions will typically have a low volume content of particles and a low viscosity, which makes it difficult to apply them to the surface of the air flow channel using existing techniques. However, the use of suspensions in processes according to the invention has been found to result in a coating layer of superior uniformity and stability.

Preferably, the process further comprises the step of drying the extruded heat source. The drying step may be conducted at ambient temperature, or may be assisted by the application of heat, pressure, or a combination of both. Typically, removal of solvent from both the extruded cylindrical heat source and the coating compound will be desired during a drying step. A drying step will usually be desired when the coating compound is a suspension, in order to remove the liquid phase of the suspension. After drying, the particles of the suspension form a uniform, dense layer. Typically, due to the removal of solvent, the shrinkage of the coating layer during the drying step and any heating steps will be high, which makes it possible to reduce the thickness of the coating still further. The degree of shrinkage of the coating layer will typically be different to that of the carbonaceous material during drying and heating, with the potential of the coating layer cracking or becoming separated from the carbonaceous material. However, using the process of the present invention, it is possible to form a coating layer which is sufficiently stable and uniform and shows sufficiently good adhesion to the carbonaceous material that these effects can be substantially eliminated.

Alternatively, or in addition to the drying step, it may be desired to process the extruded heat source in some way in order to achieve the final product. For example, it may be desired to subject the extruded heat source to thermal treatment in order to stabilise the coating, or to bring about the burnout or pyrolysis of organic additives that have been added to the coating compound to adjust its wetting or rheological properties. Preferably, the process further comprises the step of heating the heat source to a temperature of at least 750 °C, preferably under an inert atmosphere, in order to bring about sintering or pyrolysis.

The process may further incorporate a cutting step, in which the extruded cylindrical heat source is cut into individual portions. The cutting step may take place before, or after the drying step and any other additional processing steps. Each heat source preferably has a length of between about 7 mm and about 17 mm, more preferably of between about 11 mm and about 15 mm, most preferably of about 11 mm.

In preferred processes, a heat source having a single substantially central or axial airflow channel is formed. The diameter of the air flow channel is preferably between about 1.5 mm and about 3 mm, more preferably between about 2 mm and about 2.5 mm.

Preferably, the coating layer has a thickness of between about 10 microns and about 200 microns, more preferably of between about 10 microns and about 100 microns.

Preferably, the thickness of the coating layer formed on the inner surface of the air flow channel is controlled at least in part through the control of the flow rate of the coating compound through the feed passageway of the mandrel, in step (b). The flow rate may in turn be controlled through the control of at least one of the pressure and the volume of the coating compound.

In certain embodiments of the present invention, the flow rate of the coating compound is controlled such that the coating layer is formed immediately adjacent the end of the mandrel in which the outlet is provided. In this case, the flow rate of the coating compound directly affects the thickness of the coating layer that is formed. During extrusion, negative hydrostatic pressure is built up at the end of the mandrel as a result of the relative motion of the extruded heat source and the coating compound. The hydrostatic pressure in the feed passageway may be monitored using one or more pressure sensors and the flow pressure may be adjusted in response to the pressure measurements to ensure that the pressure remains at the desired level.

In alternative embodiments, the flow of the coating compound through the feed passageway in the mandrel is controlled such that a reservoir of the coating compound is formed in the portion of the air flow channel immediately adjacent to the end of the mandrel. The coating layer is formed immediately downstream of the reservoir. The flow of the coating compound may be controlled by a pump, which operates independently from the flow system for the carbonaceous material. A reservoir of the coating compound, completely filling the portion of the air flow channel immediately adjacent the end of the mandrel, may be produced by pumping an increased volume of the compound into the mandrel during the initial stage of extrusion. Subsequently, the flow volume may be adjusted so that the coating compound in the reservoir is replaced at the same rate as it is removed inside the air flow channel of the heat source. This means that throughout the extrusion process the meniscus of the reservoir advantageously remains in substantially the same position relative to the end of the mandrel. Movement of the meniscus backwards into the interior of the mandrel may disrupt the formation of the coating layer. Movement of the meniscus further away from the mandrel would result in longer sections of the air flow channel being filled than necessary.

In order to monitor and control the position of the reservoir, the position of its meniscus may be measured using a suitable non-destructive method such as X-ray absorption or beta-ray backscattering. Electromagnetic methods, such as capacitive sensors may also be employed for certain coating compounds. The presence or absence of the reservoir is detected at two or more positions along the flow channel of the coating compound. The flow rate of the compound is controlled accordingly by the pump to ensure that the meniscus remains in the desired position.

At the outlet of the feed passageway in the end of the mandrel, the edge of the mandrel wall may advantageously be bevelled in order to avoid large tensile stresses and breakaway of the coating as it is pulled over the edge of the mandrel.

The process of the present invention is used to produce a cylindrical heat source having a plurality of longitudinal air flow channels, by using a die in the extrusion step that has a plurality of mandrels mounted in the die orifice, each mandrel forming one of the air flow channels. Preferably, between two and three air flow channels are formed in the heat source. The air flow channels may have the same or different diameters to each other.

The inner surface of one or more of the air flow channels is coated. Each channel may be coated in the manner described above, by feeding a coating compound through a flow passageway in the mandrel that is creating that channel. Preferably, the inner surface of all of the air flow channels is coated. The coating compound used to coat each air flow channel may be the same as, or different to, the coating compound used to coat the other air flow channels.

The process of the present invention may be carried out with extrusion occurring in the horizontal or vertical direction. With horizontal extrusion, gravity may cause a downward draining of the coating compound after it has been formed on the inner surfaces of the air flow channel. A coating compound having a high viscosity and large yield strength is therefore preferred, in order to prevent this effect. However, during supply of the coating compound through the feed channel in the mandrel, it is preferred that the viscosity of the coating compound be as low as possible in order to avoid large stresses and abrasion in the flow channels. A coating showing thixotropic behaviour is therefore preferred. A thixotropic material is a relatively high viscosity material that undergoes a reduction in viscosity when shear force is applied and reverts to the original, higher viscosity when the shear force is removed again. Thixotropic properties may be obtained by the addition of a suitable additive to the coating compound. Suitable additives for this purpose are well known in the art. For example, anisotropic constituents such as elongated polymers, or platelet shaped particles, can be used.

The carbonaceous heat source is preferably combustible and in addition to carbon may comprise one or more additional combustible fuels including, but not limited to, aluminium, magnesium, carbides, nitrides and mixtures thereof. Preferred are combustible fuels with a high heat generating capacity, which provide very low amounts of incomplete combustion by-products and which provide for sufficient mechanical strength of the combustible heat source. The carbonaceous heat sources formed by the process of the present invention are typically porous and their porosity has a substantial impact on their combustion rate. As the combustion proceeds, oxygen may diffuse into the mass of the heat source at a rate sufficient to sustain combustion.

The heat sources produced by the process of the present invention are cylindrical and preferably of substantially uniform diameter. The heat sources may, for example, be a cylinder of substantially circular cross section, or a cylinder of substantially elliptical cross section. The cross section of the heat source may be altered by altering the cross section of the orifice in the die, through which the heat source material is extruded.

If desired, organic binders may be incorporated in the heat source. Additives may also be included, for example, additives to promote consolidation of the combustible heat source (for example sintering aids), additives to promote combustion of the heat source (for example potassium) and additives to promote decomposition of one or more gases produced by combustion of the heat source (for example catalysts). Typically, the additives will be added to the carbonaceous material prior to extrusion. However, oxidants may be added after any thermal treatments, to improve combustion and lighting properties of the heat source.

The composition and properties of the coating compound must be adapted depending on the carbonaceous material being used to form the heat source, in order to optimise the wetting of the inner surface of the air flow channel by the coating compound.

Advantageously, the coating layer of the heat source comprises a layer of solid particulate matter and is substantially air impermeable. This type of particulate coating will typically be applied in the form of a suspension, as described above. The coating may be formed from one or more suitable materials that are substantially thermally stable and non-combustible at the combustion temperature of the heat source. Suitable materials are known in the art and include, for example, clays, such as kaolin, bentonite, muscovite mica, metal oxides, such as iron oxide, alumina, titania, silica, silica-alumina, zirconia and ceria, zeolites, zirconium phosphate, graphite, glasses, and other ceramic materials or combinations thereof. Preferred coating materials include mineral compounds such as clays and micaceous iron oxide. Preferably, the coating compound contains between about 5% and about 35% by volume of one or more minerals, more preferably between about 10% and about 25% by volume. Preferably, the particle size of the minerals in the coating compound is between about 50 nm and about 20 microns.

In a particularly preferred embodiment, the coating compound is a suspension of ceramic particles.

If desired, catalytic ingredients such as ingredients that promote the oxidation of carbon monoxide to carbon dioxide may be incorporated in the coating compound. Suitable catalytic materials include, for example, platinum, palladium, transition metals and their oxides.

The coating compound may comprise one or more binders. Preferably, the coating compound comprises between about 0.5% and about 3% by weight of a binder, or a combination of binders. An example of a suitable binder is Methocel® (methyl cellulose, available from Dow Chemical Company).

The coating compound may also comprise one or more dispersing agents, to prevent agglomeration of the particles in suspension. Preferably, the coating compound contains between about 0.1% and about 10% by weight of a dispersing agent, or a combination of two or more dispersing agents, more preferably between about 0.1% and about 3%. An example of a suitable dispersing agent is Bentone® LT (organically modified special smectic clay, available from Elementis Specialties, Inc.).

An antifoaming agent may also be added to the coating compound. An example of a suitable antifoaming agent is Agitan® 731, (modified organo polysiloxanes with non-ionic alkoxylated compounds, available from Munzing Chemie).

Other suitable binders, dispersing agents and antifoaming agents, and their effects on the rheology of the suspension to which they are added, are well known by those skilled in the art.

Preferably, the viscosity of the coating compound is between 8 mPa.s and 1700 mPa.s at 100s⁻¹ and 25°C, more preferably between 100 mPa.s and 800 mPa.s at 100s⁻¹ and 25°C. (1 Pa.s = 1 kgm⁻¹s⁻¹)

The invention will now be further described, by way of example only, with reference to the accompanying drawings, in which:
Figure 1 shows a longitudinal cross section through a portion of a die during use in a process according to a first example of the present invention for making a heat source for a heated smoking article; and
Figure 2 shows a longitudinal cross section through a portion of a die during use in a process according to a second example of the present invention for making a heat source for a heated smoking article.

### Example 1

A feedstock is first produced in the conventional manner by mixing powdered carbon with a potassium-containing burn additive and an organic binder system in water to form a carbonaceous dough.

A coating compound is also prepared from the materials shown below in Table 1.

**Table 1**

| **COMPOUND** | **FUNCTION** | **% BY WEIGHT** |
|---|---|---|
| MIOx (micaceous iron oxide) | Coating material | 33.00 |
| Demineralised water | Solvent | 62.00 |
| Methocel® | Binder | 2.48 |
| Bentone® LT | Dispersing agent | 0.62 |
| Agitan® 731 | Antifoaming agent | 0.95 |
| Ethylene glycol | Plasticiser; dispersing agent | 0.95 |

To form the coating compound, an emulsion is first prepared from a mixture of demineralised water and Agitan® 731 and then small portions of the Bentone® LT are progressively dispersed in the emulsion. Ethylene glycol, then the micaceous iron oxide and finally the Methocel® are added to the dispersion in small portions. The solid fraction in the final coating compound is approximately 10% by volume and the coating compound has a viscosity of approximately 0.65 Pa.s (at 100 s⁻¹ and 25°C).

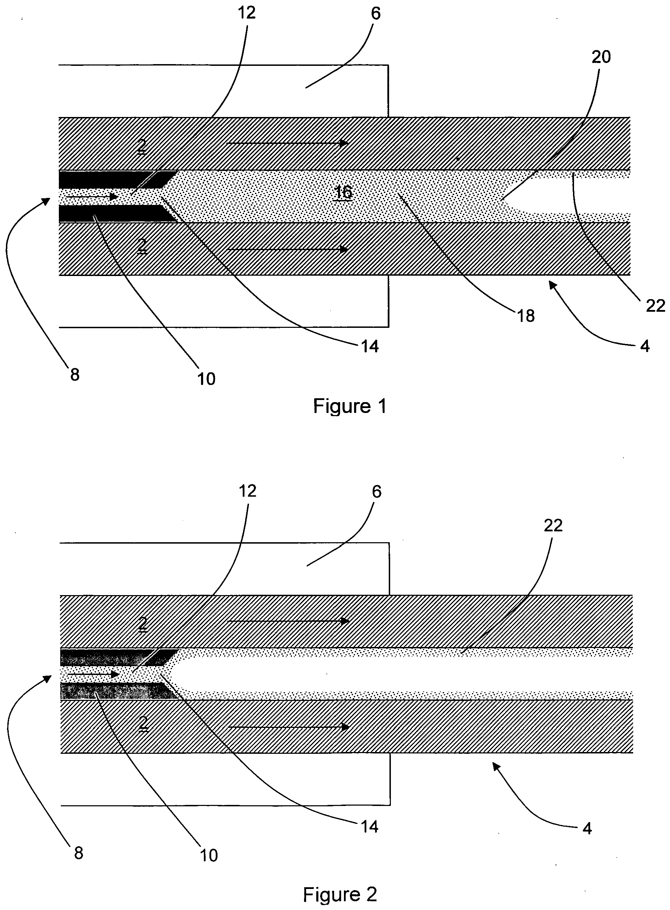

As shown in Figure 1, the carbonaceous dough 2 is extruded through a die 6 in the direction of the arrows, to form a rod 4. The speed of extrusion is approximately 12 mms⁻¹. The die 6 comprises a central die orifice 8 of circular cross section, in which there is mounted a mandrel 10. The mandrel 10 is mounted centrally in the die orifice 8 and also has a circular cross section, with an outer diameter of approximately 3 mm. The resultant extruded rod 4 is therefore cylindrical, with a circular cross section and a central longitudinal air flow channel. The longitudinal air flow channel has a circular cross section and a diameter of approximately 3 mm, corresponding to the cross section and diameter of the mandrel 10.

A feed passageway 12 extends through the centre of the mandrel 10, to an outlet 14 located in the centre of the end face of the mandrel 10. At the outlet, the mandrel walls are bevelled such that the diameter of the feed passageway at the outlet slightly increases. The coating compound 16 is introduced into the feed passageway 12 by means of a pumping system (not shown) and is fed through the passageway 12, then out of the outlet 14 into the longitudinal air flow channel in the extruded rod 4. In the initial stage of the extrusion process, the coating compound 16 is pumped through the mandrel 10 and into the feed passageway 12 such that a reservoir 18 of the coating compound 16 forms inside the longitudinal air flow channel of the rod 4 immediately adjacent to the end of the mandrel 10. Once the reservoir 18 has formed and the meniscus 20 of the reservoir is in the desired position relative to the end of the mandrel 10, the flow rate of the coating compound is controlled by the pumping system so that the coating compound 16 is fed to the reservoir 18 at the same rate as it leaves. The meniscus 20 of the reservoir is thereby retained in substantially the same position throughout the extrusion process.

As the carbonaceous dough is extruded through the die 6, the coating compound 16 in the reservoir 18 forms a coating layer 22 on the inner surface of the longitudinal air flow channel, having a thickness of approximately 250 microns.

The rod 4 is then dried at ambient temperature and pyrolised at approximately 750°C under an inert atmosphere. The dried coating has a thickness of approximately 50 microns and a porosity of approximately 50%. Finally, the rod 4 is cut to yield several cylindrical heat sources for incorporation into heated cigarettes.

### Example 2

A feedstock and coating compound are prepared as described above. As shown in Figure 2, the carbonaceous dough 2 is extruded in the direction of the arrows through a die 6 having an identical construction to that shown in Figure 1 and described above. However, unlike in Example 1, there is no reservoir of the coating compound and instead, the flow of the coating compound 16 is controlled so that a coating layer 22 is formed on the inner surface of the longitudinal air flow channel as soon the extruded cylinder 4 leaves the end of the mandrel 10. Unlike in Example 1, in which the volume of the coating compound supplied to the reservoir is controlled, in the process of Example 2, the pressure of the coating compound is controlled in order to achieve a stable process. The pressure should be kept stable to within few percent, to avoid disruption of the coating layer. The thickness of the coating layer 22 may be altered through variation of the pressure to change the flow rate of the coating compound 16.

## Claims

1. A process for the production of a cylindrical, carbonaceous heat source (4) for a heated smoking article, the heat source having a plurality of longitudinal air flow channels extending therethrough, the inner surface of at least one of which is covered with a coating layer (22), wherein the process comprises the steps of:
(a) forming the cylindrical heat source (4) by extrusion of a carbonaceous material through a die (6) comprising an orifice (8) with a plurality of mandrels (10) mounted therein to form the air flow channels, each mandrel forming one of the longitudinal air flow channels; and
(b) applying a fluid coating compound (16) to the inner surface of at least one of the air flow channels downstream of the mandrel forming the at least one air flow channel by feeding the coating compound (16) through a feed passageway (12) extending longitudinally through the mandrel (10) and having an outlet in the end thereof, wherein the coating compound wets the inner surface of the air flow channel as a result of forces of adhesion between the coating compound and the inner surface, thereby forming the coating layer (22) as the cylindrical heat source (4) is extruded.

2. A process according to claim 1 wherein the coating compound is a suspension containing ceramic particles.

3. A process according to claim 2 wherein the process further comprises the step of de-airing the suspension prior to step (b).

4. A process according to any preceding claim wherein the thickness of the coating layer (22) is controlled through the control of the flow rate of the coating compound (16) through the feed passageway (12) in step (b).

5. A process according to any preceding claim wherein the flow rate of the coating compound through the feed passageway (12) is controlled such that the coating layer (22) is formed immediately adjacent the end of the mandrel (10).

6. A process according to any of claims 1 to 4 wherein the flow of the coating compound (16) through the feed passageway (12) in the mandrel (10) is controlled so as to form a reservoir (18) of the coating compound (16) in the portion of the air flow channel immediately adjacent the end of the mandrel (10) and wherein the coating layer (22) forms downstream of the reservoir (18).

7. A process according to claim 6 wherein the position of the reservoir (18) is measured and the flow rate of the coating compound (16) is controlled in order to maintain the reservoir (18) in substantially the same position relative to the end of the mandrel (10).

8. A process according to any preceding claim, wherein the inner surfaces of two or more longitudinal air flow channels are covered with a coating layer and wherein step (b) comprises feeding a fluid coating compound into the two or more longitudinal air flow channels through feed passageways extending through the mandrels forming the two or more channels, wherein the coating compound wets the surfaces of the air flow channels thereby forming the coating layer on the inner surface of each air flow channel as the cylindrical article is extruded.

9. A process according to any preceding claim wherein a coating layer (22) having a thickness of between 10 microns and 100 microns is formed in step (b).

10. A process according to any preceding claim further comprising the step of drying the heat source formed in step (b).

11. A process according to any preceding claim further comprising the step of heating the heat source formed in step (b) to a temperature of at least 750°C.

12. A process according to any preceding claim wherein the feed passageway (12) extends through the centre of the mandrel (10).

## Patentansprüche

1. Verfahren zur Herstellung einer zylindrischen kohlenstoffhaltigen Wärmequelle (4) für einen erwärmten Raucherartikel, wobei die Wärmequelle mehrere Längsluftstromkanäle aufweist, die sich dort hindurch erstrecken, und die Innenfläche von mindestens einem mit einer Überzugsschicht (22) bedeckt ist, wobei das Verfahren die Schritte aufweist:
(a) Bilden der zylindrischen Wärmequelle (4) durch Extrusion eines kohlenstoffhaltigen Materials durch eine Matrize (6), die eine Öffnung (8) mit mehreren darin angebrachten Dornen (10) aufweist, um die Luftstromkanäle zu bilden, wobei jeder Dorn einen der Längsluftstromkanäle bildet; und
(b) Aufbringen einer Fluidbeschichtungsmasse (16) auf die Innenfläche von mindestens einem von den Luftstromkanälen nachgeschaltet des Dorns, der den mindestens einen Luftstromkanal bildet, durch Zuführen der Beschichtungsmasse (16) durch einen Zuführungsdurchgang (12), der sich in Längsrichtung durch den Dorn (10) erstreckt und einen Auslass am Ende davon aufweist, wobei die Beschichtungsmasse die Innenfläche des Luftstromkanals infolge von Adhäsionskräften zwischen der Beschichtungsmasse und der Innenfläche benetzt und dadurch die Überzugsschicht (22) bildet, während die zylindrische Wärmequelle (4) extrudiert wird.

2. Verfahren nach Anspruch 1, wobei die Beschichtungsmasse eine Suspension ist, die Keramikpartikel enthält.

3. Verfahren nach Anspruch 2, wobei das Verfahren weiter den Schritt des Entlüftens der Suspension vor dem Schritt (b) aufweist.

4. Verfahren nach einem der vorstehenden Ansprüche, wobei die Dicke der Überzugsschicht (22) durch Steuern der Strömungsgeschwindigkeit der Beschichtungsmasse (16) durch den Zuführungsdurchgang (12) in Schritt (b) gesteuert wird.

5. Verfahren nach einem der vorstehenden Ansprüche, wobei die Strömungsgeschwindigkeit der Beschichtungsmasse durch den Zuführungsdurchgang (12) derart gesteuert wird, dass die Überzugsschicht (22) unmittelbar neben dem Ende des Dorns (10) gebildet wird.

6. Verfahren nach einem der Ansprüche 1 bis 4, wobei die Strömung der Beschichtungsmasse (16) durch den Zuführungsdurchgang (12) im Dorn (10) gesteuert wird, um ein Reservoir (18) der Beschichtungsmasse (16) im Abschnitt des Luftstromkanals unmittelbar neben dem Ende des Dorns (10) zu bilden, und wobei sich die Überzugsschicht (22) nachgeschaltet des Reservoirs (18) bildet.

7. Verfahren nach Anspruch 6, wobei die Position des Reservoirs (18) gemessen wird und die Strömungsgeschwindigkeit der Beschichtungsmasse (16) gesteuert wird, um das Reservoir (18) in im Wesentlichen der gleichen Position relativ zum Ende des Dorns (10) aufrechtzuerhalten.

8. Verfahren nach einem der vorstehenden Ansprüche, wobei die Innenflächen von zwei oder mehr Längsluftstromkanälen mit einer Überzugsschicht bedeckt werden, und wobei Schritt (b) das Zuführen einer Fluidbeschichtungsmasse in die zwei oder mehr Längsluftstromkanäle durch Einspeisungsdurchgänge aufweist, die sich durch die Dorne erstrecken, welche die zwei oder mehr Kanäle bilden, wobei die Beschichtungsmasse die Flächen der Luftstromkanäle benetzt und dadurch die Überzugsschicht auf der Innenfläche jedes Luftstromkanals bildet, während der zylindrische Artikel extrudiert wird.

9. Verfahren nach einem der vorstehenden Ansprüche, wobei in Schritt (b) eine Überzugsschicht (22) mit einer Dicke zwischen 10 Mikrometer und 100 Mikrometer gebildet wird.

10. Verfahren nach einem der vorstehenden Ansprüche, weiter aufweisend den Schritt des Trocknens der in Schritt (b) gebildeten Wärmequelle.

11. Verfahren nach einem der vorstehenden Ansprüche, weiter aufweisend den Schritt des Erwärmens der in Schritt (b) gebildeten Wärmequelle auf eine Temperatur von mindestens 750 °C.

12. Verfahren nach einem der vorstehenden Ansprüche, wobei sich der Zuführungsdurchgang (12) durch das Zentrum des Dorns (10) erstreckt.

## Revendications

1. Procédé pour la production d'une source de chaleur carbonée cylindrique (4) pour un article à fumer chauffé, la source de chaleur ayant une pluralité de canaux longitudinaux d'écoulement d'air qui la traversent, la surface intérieure d'au moins un desquels est couverte d'une couche de revêtement (22), où le procédé comprend les étapes consistant :
(a) de la formation de la source de chaleur cylindrique (4) par l'extrusion d'un matériau carboné à travers une filière (6) comprenant une ouverture (8) avec une pluralité de mandrins (10) montés en elle pour former des canaux d'écoulement d'air, chaque mandrin formant un des canaux d'écoulement d'air longitudinaux ; et
(b) de l'application d'un composé de revêtement fluide (16) à la surface intérieure d'au moins un des canaux d'écoulement d'air en aval du mandrin formant l'au moins un canal d'écoulement d'air en introduisant le composé de revêtement (16) à travers une voie de passage d'introduction (12) s'étendant longitudinalement à travers le mandrin (10) et ayant une sortie à l'extrémité de celui-ci, où le composé de revêtement humidifie la surface intérieure du canal d'écoulement d'air en raison des forces d'adhérence entre le composé de revêtement et la surface intérieure, formant ainsi la couche de revêtement (22) pendant que la source de chaleur (4) est extrudée.

2. Procédé selon la revendication 1, dans lequel le composé de revêtement est une suspension contenant des particules de céramique.

3. Procédé selon la revendication 2, dans lequel le procédé comprend en outre l'étape de désaérage de la suspension avant l'étape (b).

4. Procédé selon l'une quelconque des revendications précédentes, dans lequel l'épaisseur de la couche de revêtement (22) est contrôlée par le biais du contrôle du débit du composé de revêtement (16) à travers la voie de passage d'introduction (12) dans l'étape (b).

5. Procédé selon l'une quelconque des revendications précédentes, dans lequel le débit du composé de revêtement à travers la voie de passage d'introduction (12) est contrôlé de telle sorte que la couche de revêtement (22) est formée immédiatement adjacente à l'extrémité du mandrin (10).

6. Procédé selon l'une quelconque des revendications 1 à 4, dans lequel le flux du composé de revêtement (16) à travers la voie de passage d'introduction (12) dans le mandrin (10) est contrôlé de façon à former un réservoir (18) du composé de revêtement (16) dans la partie du canal d'écoulement d'air immédiatement adjacente à l'extrémité du mandrin (10) et dans lequel la couche de revêtement (22) se forme en aval du réservoir (18).

7. Procédé selon la revendication 6, dans lequel la position du réservoir (18) est mesurée et le débit du composé de revêtement (16) est contrôlé afin de maintenir le réservoir (18) essentiellement dans la même position relative par rapport à l'extrémité du mandrin (10).

8. Procédé selon l'une quelconque des revendications précédentes, dans lequel les surfaces internes de deux ou plusieurs canaux d'écoulement d'air longitudinaux sont couvertes d'une couche de revêtement et dans lequel l'étape (b) comprend l'introduction d'un composé de revêtement fluide dans les deux ou plusieurs canaux d'écoulement d'air longitudinaux à travers des voies de passage d'introduction s'étendant à travers les mandrins formant les deux ou plusieurs canaux, où le composé de revêtement humidifie les surfaces des canaux d'écoulement d'air formant ainsi la couche de revêtement sur la surface intérieure de chaque canal d'écoulement d'air pendant que l'article cylindrique est extrudé.

9. Procédé selon l'une quelconque des revendications précédentes, dans lequel une couche de revêtement (22) ayant une épaisseur d'entre 10 microns et 100 microns est formée dans l'étape (b).

10. Procédé selon l'une quelconque des revendications précédentes, comprenant, en outre, l'étape consistant du séchage de la source de chaleur formée dans l'étape (b).

11. Procédé selon l'une quelconque des revendications précédentes, comprenant, en outre, l'étape consistant du chauffage de la source de chaleur formée dans l'étape (b) à une température d'au moins 750 °C.

12. Procédé selon l'une quelconque des revendications précédentes, dans lequel la voie de passage d'introduction (12) s'étend à travers le centre du mandrin (10).
